# EUROPÄISCHE PATENTSCHRIFT

(11) **EP 4 384 713 B1**
(45) Veröffentlichungstag und Bekanntmachung des Hinweises auf die Patenterteilung: **28.10.2026**
(21) Anmeldenummer: 22757277.3
(22) Anmeldetag: 26.07.2022
(51) Int. Cl.: F04D 19/00, F04D 29/32, F04D 29/70, F04D 25/08, H02K 5/10, F04D 25/06

(54) **SPRITZSCHUTZVORRICHTUNG FÜR EINEN LÜFTER**
SPLASH GUARD FOR A FAN
PARE-ÉCLABOUSSURES POUR UN VENTILATEUR

(30) Priorität: 09.08.2021 DE 102021120613
(43) Veröffentlichungstag der Anmeldung: 19.06.2024
(73) Patentinhaber: EBM-PAPST ST. GEORGEN GMBH & CO. KG, 78112 St. Georgen (DE)
(72) Erfinder: MÜLLER, Martin, 72280 Dornstetten (DE); WENDLAND, Sabine, 78056 Villingen-Schwenningen (DE); MÜLLER, Maik, 78112 St. Georgen (DE)
(74) Vertreter: Staeger & Sperling Partnerschaftsgesellschaft mbB
(86) Internationale Anmeldenummer: PCT/EP2022/070908
(87) Internationale Veröffentlichungsnummer: WO 2023/016796

(56) Entgegenhaltungen:
- US-A1- 2017 288 497
- US-A1- 2018 337 567
- US-B1- 6 359 354

## Beschreibung

Die Erfindung betrifft eine Spritzschutzvorrichtung für einen Lüfter, ausgebildet zur Montage an einem Rotortopfboden eines Rotortopfes des Lüfters, mit einem um eine Rotationsachse umlaufenden Ringelement, welches mit einer axialen Außenfläche abdichtend an einer axialen Innenwandfläche des Rotortopfbodens anordenbar ist. Ferner betrifft die Erfindung einen Lüfter mit der Spritzvorrichtung.

Aus dem Stand der Technik ist eine Vielzahl von Serienlüftern bekannt, welche bei Bahnanwendungen eingesetzt werden. Eine Anforderung an einen derartigen Lüfter ist eine uneingeschränkte Einbaulage. Besonders die Lager und rotierenden Teile im Rotortopf des Lüfters sind hierbei vor einer eintretenden Flüssigkeit zu schützen. Bisher wird von außen auf das Gehäuse des entsprechenden Lüfters ein Deckel oder ein Klebeschild angebracht, um das Eintreten einer Flüssigkeit in den Lüfter zu verhindern. Dadurch können bestehende Lüfter aus dem Stand der Technik jedoch nicht in jeglicher Einbaulage eingesetzt werden. Weiter nachteilig daran ist, dass hierfür bisher ein komplettes Abdichten der Kondenswasseröffnungen des Rotortopfes nötig ist, wodurch eine Montage des Lüfters mit einem Spritzschutz sehr aufwändig ist und oder verschiedene Lüftervarianten, welche an die jeweiligen Betriebsanforderungen angepasst sind, nötig werden.

Druckschriftlicher Stand der Technik im vorliegenden technischen Gebiet ist in den Dokumenten US 2017/288 497 A1, US 2018/337 567 A1 und US 6 359 354 B1 offenbart.

Es ist daher Aufgabe der vorliegenden Erfindung, eine Spritzschutzvorrichtung für einen Lüfter bereitzustellen, welcher den Lüfter vor einer eintretenden Flüssigkeit, insbesondere in den Rotortopf, schützt und den Montageaufwand für den Lüfter reduziert.

Diese Aufgabe wird durch die Merkmalskombination gemäß Patentanspruch 1 gelöst.

Erfindungsgemäß wird eine Spritzschutzvorrichtung für einen Lüfter, insbesondere vor einer in den Lüfter eintretenden Flüssigkeit, ausgebildet zur Montage an einem Rotortopfboden eines Rotortopfes des Lüfters, mit einem um eine Rotationsachse umlaufenden Ringelement, welches mit einer axialen Außenfläche abdichtend an einer axialen Innenwandfläche des Rotortopfbodens anordenbar ist, vorgeschlagen. An dem Ringelement ist wenigstens ein Befestigungselement zur Fixierung an dem Rotortopfbodenelement ausgebildet. Außerdem ist an einer der axialen Außenfläche gegenüberliegenden axialen Innenfläche des Ringelements ein um die Rotationsachse umlaufender axialer Ringvorsprung ausgebildet. Ferner ist an dem Ringelement wenigstens ein Abschirmsegment ausgebildet, welches sich von dem Ringelement nach radial außen und zumindest über einen Teil eines Gesamtumfangs des Ringelements erstreckt, derart, dass eine auf das Abschirmsegment auftreffenden Flüssigkeit radial nach außen gerichtet ableitbar ist.

Vorteilhaft daran ist, dass direkt in den Rotortopf eintretende Flüssigkeit an den Abschirmsegmenten abprallt und von dem Lagersystem abgeleitet wird. Des Weiteren tropft an dem axialem Ringvorsprung eine an dem Rotortopf entlanglaufende Flüssigkeit ab, insbesondere bei einer Einbaulage in welcher der Rotortopfboden nach oben ausgerichtet ist. Auf diese Weise bleibt das Lagersystem trocken. Durch den Einsatz der Spritzschutzvorrichtung kann der Lüfter in jeglicher Einbaulage montiert bzw. angewendet werden. Dadurch sind keine zusätzlichen Lüftervarianten für verschiedene Anwendungsfälle notwendig und der Lüfter ist vor einer eintretenden Flüssigkeit, insbesondere in den Rotortopf, geschützt. Dadurch ist der Lüfter flexibler in der Anwendung und es ergibt sich eine Ersparnis in der Logistik sowie der Lagerhaltung.

In einer vorteilhaften Ausführungsform der Erfindung erstreckt sich das Abschirmsegment über einen Teil des Gesamtumfangs des Ringelements. Dabei werden als Abprallfläche für die einspritzende Flüssigkeit einzelne Abschirmsegmente verwendet, um ein großflächiges festfrieren des gesamten Rings bei einer Anwendung mit niedrigen Temperaturen zu vermeiden.

Vorzugsweise ist die Spritzschutzvorrichtung derart ausgebildet, dass das wenigstens eine Abschirmsegment zu einer Axialebene senkrecht zur Rotationsachse gewinkelt angeordnet ist. Dadurch verläuft das wenigstens eine Abschirmsegment schräg zur Axialebene und erstreckt sich von Richtung der axialen Außenfläche in Richtung der axialen Innenfläche sowie in einem montierten Zustand von Richtung des Rotortopfbodens in den Rotortopf hinein bzw. entgegen Richtung des Rotortopfboden bzw. weg vom Rotortopfboden. Folglich sind die Abschirmsegmente schräg angebracht, um die Flüssigkeit nach außen abzuleiten.

Erfindungsgemäß ist vorgesehen, dass das wenigstens eine Abschirmsegment von der axialen Außenfläche axial beabstandet an einer nach radial außen weisenden Umfangsfläche des Ringelements ausgebildet ist. Dadurch kann in einem montierten Zustand bei einer Einbaulage des Rotors des Lüfters nach unten, Wasser an den Abschirmsegmenten vorbeifließen und durch in einem Rotortopf entsprechend ausgebildeten Öffnungen aus dem Rotortopf fließen.

Ferner ist eine Ausführung günstig, bei welcher an dem Ringelement eine Vielzahl von Abschirmsegmenten ausgebildet ist und die jeweiligen Abschirmsegmente in Umgangsrichtung des Ringelements gleichmäßig beabstandet angeordnet sind. In einem Ausführungsbeispiel sind drei Abschirmsegmente ausgebildet, welche in einem Abstand von jeweils 120° zueinander beabstandet sind. Auf diese Weise sind die Rotationseigenschaften der Spritzschutzvorrichtung für den Lüfter verbessert.

In einer bevorzugten Ausführungsform der Spritzschutzvorrichtung ist an dem Ringelement eine Vielzahl von Befestigungselementen ausgebildet und die jeweiligen Befestigungselemente sind in Umfangsrichtung des Ringelements gleichmäßig beabstandet angeordnet. Weiter vorteilhaft ist es, wenn drei Befestigungselemente ausgebildet sind, welche in einem Abstand von jeweils 120° zueinander beabstandet und jeweils mittig zwischen zwei benachbarten Abschirmsegmenten angeordnet sind. Vorteilhaft daran ist, dass die Spritzschutzvorrichtung sicher an dem Rotortopfboden fixiert ist und gleichzeitig rotationssymmetrisch ausgebildet ist, wodurch wiederum die Rotationseigenschaften der Spritzschutzvorrichtung optimiert sind.

In einer vorteilhaften Ausführungsvariante ist erfindungsgemäß vorgesehen, dass das wenigstens eine Abschirmsegment in einer axialen Draufsicht gesehen zungenförmig ausgebildet ist. Auf diese Weise ist die Oberfläche zum Verringern eines Gesamtgewichts der Spritzschutzeinrichtung reduziert und gleichzeitig gewährleistet, dass die in den Rotortopf eintretende Flüssigkeit radial nach außen gerichtet abgeleitet wird.

In einer alternativen Ausführungsvariante der Erfindung ist das wenigstens eine Befestigungselement bolzenförmig ausgebildet und steht von der axialen Außenfläche des Ringelements hervor. Ferner ist eine Ausführung günstig, bei welcher das wenigstens eine Befestigungselement entlang seiner axialen Längserstreckung zwei gegenüberliegende Nuten aufweist. Die entsprechende bolzenförmige Geometrie des wenigstens einen Befestigungselement ist besonders günstig für eine Befestigung der Spritzschutzvorrichtung an einem Lüfter bzw. einem Rotortopfboden des Lüfters.

In einer bevorzugten Ausführungsform der Erfindung ist der axiale Ringvorsprung zumindest an seiner Innenfläche abgestuft oder kegelförmig oder trichterförmig ausgebildet ist, wobei sich ein Innendurchmesser des axialen Ringvorsprungs zu dem Ringelement hin verringert. Dadurch bildet die Spritzschutzvorrichtung in einem montierten Zustand ein Labyrinth bzw. eine Labyrinthdichtung mit einem Lagerrohr eines Lüftergehäuses.

Erfindungsgemäß wird ferner ein Lüfter mit einem Rotortopf und einer Spritzschutzvorrichtung gemäß der vorstehenden Offenbarung angeordnet an einem Rotortopfboden des Rotortopfes vorgeschlagen. Durch den Einsatz der Spritzschutzvorrichtung kann der Lüfter in jeglicher Einbaulage montiert werden, da diese den Lüfter vor einer eintretenden Flüssigkeit, insbesondere in den Rotortopf, schützt. Gleichzeitig ist der Montageaufwand für den Lüfter reduziert.

In einer bevorzugten Ausführungsvariante ist das Ringelement mit der axialen Außenfläche abdichtend an einer Innenfläche des Rotortopfbodens des Rotortopfs angeordnet und das Ringelement mittels des wenigstens einen Befestigungselements an dem Rotortopfboden fixiert. An der der axialen Außenfläche gegenüberliegenden axialen Innenfläche des Ringelements ist in einer weiteren vorteilhaften Variante der axiale Ringvorsprung ausgebildet, in welchem ein in dem Rotortopf angeordnetes Lagersystem eines Rotors des Lüfters zumindest abschnittsweise oder teilweise aufgenommen ist. Ferner ist erfindungsgemäß vorgesehen, dass an dem Ringelement wenigstens ein Abschirmsegment ausgebildet ist, welches sich von dem Ringelement nach radial außen und zumindest über einen Teil des Gesamtumfangs des Ringelements erstreckt, derart, dass eine in den Rotortopf eintretende und auf das Abschirmsegment auftreffenden Flüssigkeit von dem entsprechenden Abschirmsegment radial nach außen gerichtet ableitbar ist und der rohrförmige Vorsprung derart ausgebildet ist, dass eine an dem Rotortopf entlangfließende Flüssigkeit an dem axialen Ringvorsprung abtropfbar ist bzw. abtropft. Auf diese Weise prallt eine direkt in den Rotortopf eintretende Flüssigkeit an den Abschirmsegmenten ab und wird von dem Lagersystem abgeleitet. Außerdem tropft an dem axialen Ringvorsprung eine an dem Rotortopf entlanglaufende Flüssigkeit ab, insbesondere bei einer Einbaulage in welcher der Rotortopfboden nach oben ausgerichtet ist. Auf diese Weise bleibt das Lagersystem trocken. Durch den Einsatz der Spritzschutzvorrichtung kann der Lüfter in jeglicher Einbaulage montiert bzw. angewendet werden. Dadurch sind keine zusätzlichen Lüftervarianten für verschiedene Anwendungsfälle notwendig und der Lüfter ist vor einer eintretenden Flüssigkeit, insbesondere in den Rotortopf, geschützt. Dementsprechend ist der Lüfter flexibler in der Anwendung und es ergibt sich eine Ersparnis in der Logistik sowie der Lagerhaltung.

In einer vorteilhaften Ausführungsvariante weist der Rotortopfboden des Rotortopfs eine Vielzahl von Öffnungen auf und die Spritzschutzvorrichtung ist mittels des wenigstens einen Befestigungselements in jeweils einer der Öffnungen fixiert. Dabei ist insbesondere eine der Öffnungen frei. Häufig weist ein Rotortopf sechs Öffnungen auf, von denen jeweils in drei Öffnungen ein Befestigungselement fixiert ist und jeweils drei Öffnungen frei bzw. geöffnet sind. Die Öffnungen sind insbesondere Kondenswasseröffnungen. Bei der Einbaulage mit dem Rotor nach unten kann eine Flüssigkeit trotz einer montierten Spritzschutzvorrichtung durch die Öffnungen in dem Rotortopfboden ablaufen.

In einem Ausführungsbeispiel der Erfindung ist vorgesehen, dass das wenigstens eine Befestigungselement an der entsprechenden Öffnung des Rotortopfbodenelements mittels Kleben oder Ultraschallschweißen oder einer Presspassung fixiert ist. Diese Befestigungsmethoden sind besonders geeignet, um die Spritzschutzvorrichtung an dem Lüfter bzw. dem Rotortopfboden des Lüfters mit einem geringen Montageaufwand zu fixieren.

In einer bevorzugten Ausführungsform der Spritzschutzvorrichtung bildet der axiale Ringvorsprung mit einem Lagerrohr eines Lüftergehäuses des Lüfters ein Labyrinth oder eine Labyrinthdichtung aus. Dadurch ist der Lüfter durch die Spritzschutzvorrichtung besser vor einer eintretenden Flüssigkeit geschützt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Ansicht von oben einer Spritzschutzvorrichtung für einen Lüfter;
- Fig. 2: eine Ansicht von unten der Spritzschutzeinrichtung für einen Lüfter;
- Fig. 3: eine Schnittansicht eines Lüfters mit der Spritzschutzvorrichtung;
- Fig. 4: ein Ausschnitt der Schnittansicht des Lüfters mit der Spritzschutzvorrichtung.

Die Figuren sind beispielhaft schematisch. Gleiche Bezugszeichen in den Figuren weisen auf gleiche funktionale und/oder strukturelle Merkmale hin.

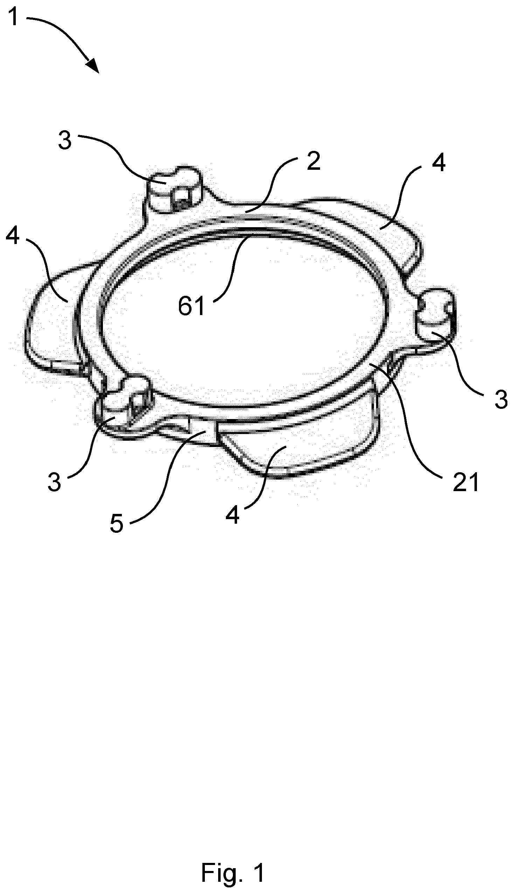

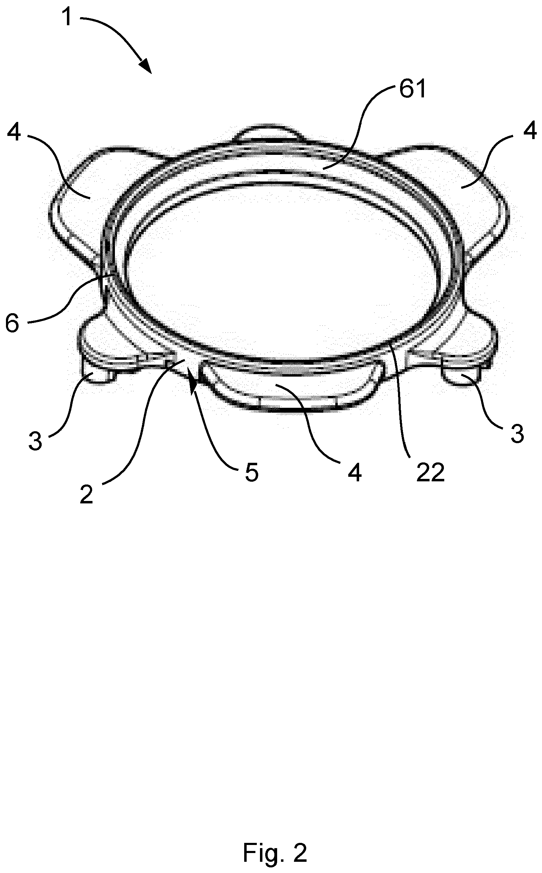

In Figur 1 ist eine Ansicht von oben einer Spritzschutzvorrichtung 1 für einen Lüfter 10 dargestellt. Darüber hinaus zeigt Figur 2 eine Ansicht von unten der Spritzschutzeinrichtung 1 für einen Lüfter 10.

Die Spritzschutzvorrichtung 1 ist dabei zur Montage an einem Rotortopfboden 12 eines Rotortopfes 11 des Lüfters 10 ausgebildet und weist ein um eine Rotationsachse umlaufendes Ringelement 2 auf, welches mit einer axialen Außenfläche 21 abdichtend an einer axialen Innenwandfläche 13 des Rotortopfbodens 12 anordenbar ist. An dem Ringelement 2 sind drei Befestigungselemente 3 zur Fixierung an dem Rotortopfbodenelement 12 ausgebildet, welche in Umfangsrichtung des Ringelements 2 gleichmäßig beabstandet angeordnet sind.

An einer der axialen Außenfläche 21 gegenüberliegenden axialen Innenfläche 22 des Ringelements 2 ist ein um die Rotationsachse umlaufender axialer Ringvorsprung 6 ausgebildet, welcher an seiner Innenfläche abgestuft und kegelförmig ausgebildet ist. Dabei verringert sich ein Innendurchmesser des axialen Ringvorsprungs 6 zu dem Ringelement 2 hin.

Außerdem sind an dem Ringelement 2 drei Abschirmsegmente 4 ausgebildet, welche sich von dem Ringelement 2 nach radial außen und über einen Teil eines Gesamtumfangs des Ringelements 2 erstrecken, derart, dass eine auf das Abschirmsegment 4 auftreffenden Flüssigkeit radial nach außen gerichtet ableitbar ist. Die jeweiligen Abschirmsegmente 4 sind in Umgangsrichtung des Ringelements 2 gleichmäßig beabstandet angeordnet, insbesondere in einem Abstand von jeweils 120° zueinander. Darüber hinaus ist das jeweilige Abschirmsegment 4 zu einer Axialebene senkrecht zur Rotationsachse gewinkelt angeordnet und von der axialen Außenfläche 21 axial beabstandet an einer nach radial außen weisenden Umfangsfläche 5 des Ringelements 2 ausgebildet. Ferner ist das jeweilige Abschirmsegment 4 in einer axialen Draufsicht gesehen zungenförmig ausgebildet.

Des Weiteren sind die drei Befestigungselemente 3 an dem Ringelement in einem Abstand von jeweils 120° zueinander beabstandet ausgebildet und jeweils mittig zwischen zwei benachbarten Abschirmsegmenten 4 angeordnet. Die drei Befestigungselemente 3 sind bolzenförmig und stehen von der axialen Außenfläche 21 des Ringelements 2 hervor. Außerdem weist das jeweilige Befestigungselement 3 entlang seiner axialen Längserstreckung zwei gegenüberliegende Nuten auf.

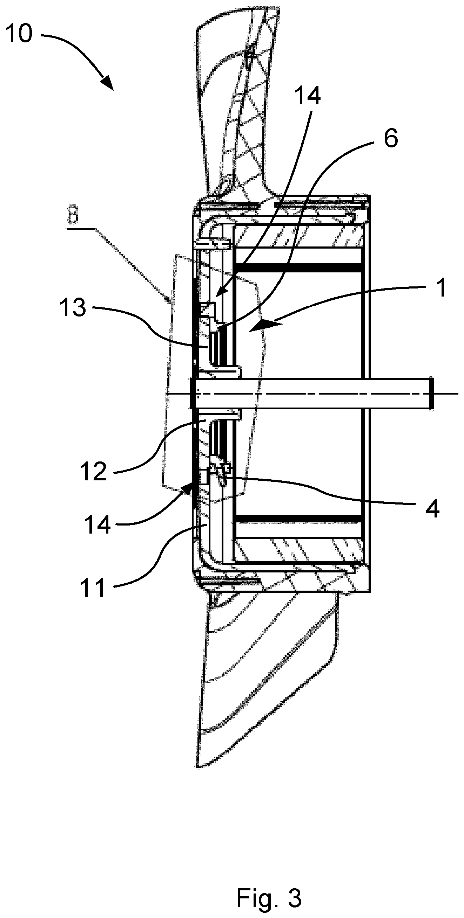

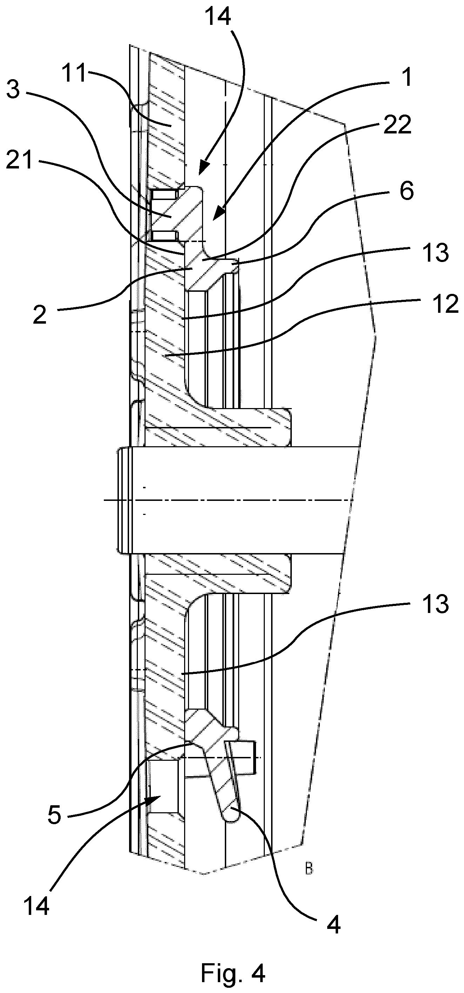

In Figur 3 ist eine Schnittansicht eines Lüfters 10 mit den in der Figuren 1 und 2 gezeigten Spritzschutzvorrichtung 1 dargestellt. Ferner zeigt Figur 4 einen Ausschnitt B der Schnittansicht des Lüfters 10 mit der Spritzschutzvorrichtung 1.

Der Lüfter 10 umfasst einen Rotortopf 11 und eine Spritzschutzvorrichtung 1 gemäß der vorstehenden Offenbarung, angeordnet an einem Rotortopfboden 12 des Rotortopfes 11. Das Ringelement 2 ist mit der axialen Außenfläche 21 abdichtend an einer Innenfläche 13 des Rotortopfbodens 12 des Rotortopfs 11 angeordnet. Ferner ist das Ringelement 2 mittels der drei Befestigungselemente 3 an dem Rotortopfboden 12 fixiert.

An der der axialen Außenfläche 21 gegenüberliegenden axialen Innenfläche 22 des Ringelements 2 ist der axiale Ringvorsprung 6 ausgebildet, in welchem ein in dem Rotortopf 11 angeordnetes Lagersystem (nicht dargestellt) eines Rotors des Lüfters 10 zumindest abschnittsweise aufgenommen ist.

An dem Ringelement 2 sind die drei Abschirmsegmente 4 ausgebildet, welche sich von dem Ringelement 2 nach radial außen und über einen Teil des Gesamtumfangs des Ringelements 2 erstrecken, derart, dass eine in den Rotortopf 11 eintretende und auf das Abschirmsegment 4 auftreffenden Flüssigkeit von dem entsprechenden Abschirmsegment 4 radial nach außen gerichtet ableitbar ist und der rohrförmige Vorsprung 6 derart ausgebildet ist, dass eine an dem Rotortopf 11 entlangfließende Flüssigkeit an dem axialen Ringvorsprung 6 abtropfbar ist bzw. abtropft.

Außerdem weist der Rotortopfboden 12 des Rotortopfs 11 in dem in den Figuren 3 und 4 gezeigten Ausführungsbeispiel sechs Öffnungen 14 auf und die Spritzschutzvorrichtung 1 ist mittels der drei Befestigungselemente 3 in jeweils einer der Öffnungen 14 fixiert. Darüber hinaus ist das jeweilige Befestigungselement 3 an der entsprechenden Öffnung 14 des Rotortopfbodens 12 mittels Kleben oder Ultraschallschweißen oder einer Presspassung fixiert. Die anderen drei Öffnungen 14 sind frei bzw. geöffnet. Im Bereich der jeweiligen freien bzw. geöffneten Öffnung ist jeweils ein Abschirmsegment 4 der Spritzschutzvorrichtung 1 beabstandet von der Innenfläche 13 des Rotortopfbodens 12 angeordnet.

Des Weiteren bildet der axiale Ringvorsprung 6 mit einem Lagerrohr eines Lüftergehäuses des Lüfters 10 ein Labyrinth/eine Labyrinthdichtung aus.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Spritzschutzvorrichtung (1) für einen Lüfter (10), ausgebildet zur Montage an einem Rotortopfboden (12) eines Rotortopfes (11) des Lüfters (10),
mit einem um eine Rotationsachse umlaufenden Ringelement (2), welches mit einer axialen Außenfläche (21) abdichtend an einer axialen Innenwandfläche (13) des Rotortopfbodens (12) anordenbar ist,
wobei an dem Ringelement (2) wenigstens ein Befestigungselement (3) zur Fixierung an dem Rotortopfbodenelement (12) ausgebildet ist,
wobei an einer der axialen Außenfläche (21) gegenüberliegenden axialen Innenfläche (22) des Ringelements (2) ein um die Rotationsachse umlaufender axialer Ringvorsprung (6) ausgebildet ist,
wobei an dem Ringelement (2) wenigstens ein Abschirmsegment (4) ausgebildet ist, welches sich von dem Ringelement (2) nach radial außen und zumindest über einen Teil eines Gesamtumfangs des Ringelements (2) erstreckt, derart, dass eine auf das Abschirmsegment (4) auftreffenden Flüssigkeit radial nach außen gerichtet ableitbar ist
**dadurch gekennzeichnet, dass** das wenigstens eine Abschirmsegment (4) von der axialen Außenfläche (21) axial beabstandet an einer nach radial außen weisenden Umfangsfläche (5) des Ringelements (2) ausgebildet ist.

2. Spritzschutzvorrichtung (1) gemäß Anspruch 1, wobei sich das Abschirmsegment (4) über einen Teil des Gesamtumfangs des Ringelements (2) erstreckt.

3. Spritzschutzvorrichtung (1) gemäß Anspruch 1 oder 2, wobei das wenigstens eine Abschirmsegment (4) zu einer Axialebene senkrecht zur Rotationsachse gewinkelt angeordnet ist.

4. Spritzschutzvorrichtung (1) gemäß einem der vorhergehenden Ansprüche, wobei an dem Ringelement (2) eine Vielzahl von Abschirmsegmenten (4) ausgebildet ist und die jeweiligen Abschirmsegmente (4) in Umgangsrichtung des Ringelements (2) gleichmäßig beabstandet angeordnet sind.

5. Spritzschutzvorrichtung (1) gemäß Anspruch 4, wobei drei Abschirmsegmente (4) ausgebildet sind, welche in einem Abstand von jeweils 120° zueinander beabstandet sind.

6. Spritzschutzvorrichtung gemäß einem der vorhergehenden Ansprüche, wobei an dem Ringelement (2) eine Vielzahl von Befestigungselementen (3) ausgebildet ist und die jeweiligen Befestigungselemente (3) in Umfangsrichtung des Ringelements (2) gleichmäßig beabstandet angeordnet sind.

7. Spritzschutzvorrichtung gemäß Anspruch 5 und 6, wobei drei Befestigungselemente (3) ausgebildet sind, welche in einem Abstand von jeweils 120° zueinander beabstandet sind und jeweils mittig zwischen zwei benachbarten Abschirmsegmenten (4) angeordnet sind.

8. Spritzschutzvorrichtung (1) gemäß einem der vorhergehenden Ansprüche, wobei das wenigstens eine Abschirmsegment (4) in einer axialen Draufsicht gesehen zungenförmig ausgebildet ist.

9. Spritzschutzvorrichtung (1) gemäß einem der vorhergehenden Ansprüche, wobei das wenigstens eine Befestigungselement (3) bolzenförmig ausgebildet ist und von der axialen Außenfläche (21) des Ringelements (2) hervorsteht.

10. Spritzschutzvorrichtung (1) gemäß Anspruch 9, wobei das wenigstens eine Befestigungselement (3) entlang seiner axialen Längserstreckung zwei gegenüberliegende Nuten aufweist.

11. Spritzschutzvorrichtung (1) gemäß einem der vorhergehenden Ansprüche, wobei der axiale Ringvorsprung (6) zumindest an seiner Innenfläche (61) abgestuft oder kegelförmig oder trichterförmig ausgebildet ist, wobei sich ein Innendurchmesser des axialen Ringvorsprungs (6) zu dem Ringelement (2) hin verringert.

12. Lüfter (10) mit einem Rotortopf (11) und einer Spritzschutzvorrichtung (1) gemäß einem der vorhergehenden Ansprüche angeordnet an einem Rotortopfboden (12) des Rotortopfes (11).

13. Lüfter (10) gemäß Anspruch 12, wobei das Ringelement (2) mit der axialen Außenfläche (21) abdichtend an einer Innenfläche (13) des Rotortopfbodens (12) des Rotortopfs (11) angeordnet ist.

14. Lüfter (10) gemäß einem der Ansprüche 12 oder 13, wobei das Ringelement (2) mittels des wenigstens einen Befestigungselements (3) an dem Rotortopfboden (12) fixiert ist.

15. Lüfter gemäß einem der Ansprüche 12 bis 14, wobei an der der axialen Außenfläche (21) gegenüberliegenden axialen Innenfläche (22) des Ringelements (2) der axiale Ringvorsprung (6) ausgebildet ist, in welchem ein in dem Rotortopf (11) angeordnetes Lagersystem eines Rotors des Lüfters (10) zumindest abschnittsweise oder teilweise aufgenommen ist.

16. Lüfter (10) gemäß einem der vorhergehenden Ansprüche 12 bis 15, wobei an dem Ringelement (2) wenigstens ein Abschirmsegment (4) ausgebildet ist, welches sich von dem Ringelement (2) nach radial außen und zumindest über einen Teil des Gesamtumfangs des Ringelements (2) erstreckt, derart, dass eine in den Rotortopf (11) eintretende und auf das Abschirmsegment (4) auftreffenden Flüssigkeit von dem entsprechenden Abschirmsegment (4) radial nach außen gerichtet ableitbar ist und der rohrförmige Vorsprung (6) derart ausgebildet ist, dass eine an dem Rotortopf (11) entlangfließende Flüssigkeit an dem axialen Ringvorsprung (6) abtropfbar ist.

17. Lüfter (10) gemäß einem der vorhergehenden Ansprüche 12 bis 16, wobei der Rotortopfboden (12) des Rotortopfs (11) eine Vielzahl von Öffnungen (14) aufweist und die Spritzschutzvorrichtung (1) mittels des wenigstens einen Befestigungselements (3) in jeweils einer der Öffnungen (14) fixiert ist.

18. Lüfter (10) gemäß Anspruch 17, wobei das wenigstens eine Befestigungselement (3) an der entsprechenden Öffnung (14) des Rotortopfbodenelements (12) mittels Kleben oder Ultraschallschweißen oder einer Presspassung fixiert ist.

19. Lüfter (10) gemäß einem der vorhergehenden Ansprüche 12 bis 18, wobei der axiale Ringvorsprung (6) mit einem Lagerrohr eines Lüftergehäuses des Lüfters (10) ein Labyrinth oder eine Labyrinthdichtung ausbildet.

## Claims

1. A splash guard (1) for a fan (10), configured for mounting on a rotor can bottom (12) of a rotor can (11) of the fan (10),
comprising a ring element (2) extending around an axis of rotation, which is arrangable with an axial outer surface (21) sealingly against an axial inner wall surface (13) of the rotor can bottom (12),
wherein at least one fastening element (3) for fixing to the rotor can bottom element (12) is formed on the ring element (2),
wherein an axial annular projection (6) extending around the axis of rotation is formed on an axial inner surface (22) of the ring element (2) opposite the axial outer surface (21),
wherein at least one shielding segment (4) is formed on the ring element (2), which shielding segment extends radially outwards from the ring element (2) and over at least part of an overall circumference of the ring element (2), such that a liquid impinging on the shielding segment (4) is dischargeable in a radially outward direction,
**characterised in that** the at least one shielding segment (4) is formed, axially spaced apart from the axial outer surface (21), on a circumferential surface (5) of the ring element (2) facing radially outwards.

2. The splash guard (1) according to claim 1, wherein the shielding segment (4) extends over part of the overall circumference of the ring element (2).

3. The splash guard (1) according to claim 1 or 2, wherein the at least one shielding segment (4) is arranged at an angle relative to an axial plane perpendicular to the axis of rotation.

4. The splash guard (1) according to any one of the preceding claims, wherein a plurality of shielding segments (4) are formed on the ring element (2), and the respective shielding segments (4) are arranged at equal spacings in the circumferential direction of the ring element (2).

5. The splash guard (1) according to claim 4, wherein three shielding segments (4) are formed, which are spaced apart from one another at a respective spacing of 120°.

6. The splash guard according to any one of the preceding claims, wherein a plurality of fastening elements (3) are formed on the ring element (2), and the respective fastening elements (3) are arranged at equal spacings in the circumferential direction of the ring element (2).

7. The splash guard according to claims 5 and 6, wherein three fastening elements (3) are formed, which are spaced apart from one another at a respective spacing of 120° and are each arranged centrally between two adjacent shielding segments (4).

8. The splash guard (1) according to any one of the preceding claims, wherein the at least one shielding segment (4) is tongue-shaped when viewed in an axial plan view.

9. The splash guard (1) according to any one of the preceding claims, wherein the at least one fastening element (3) is bolt-shaped and projects from the axial outer surface (21) of the ring element (2).

10. The splash guard (1) according to claim 9, wherein the at least one fastening element (3) has two mutually opposite grooves along its axial longitudinal extent.

11. The splash guard (1) according to any one of the preceding claims, wherein the axial annular projection (6) is stepped or conical or funnel-shaped at least on its inner surface (61), wherein an inner diameter of the axial annular projection (6) decreases towards the ring element (2).

12. A fan (10) comprising a rotor can (11) and a splash guard (1) according to any one of the preceding claims, arranged on a rotor can bottom (12) of the rotor can (11).

13. The fan (10) according to claim 12, wherein the ring element (2) is arranged with the axial outer surface (21) sealingly against an inner surface (13) of the rotor can bottom (12) of the rotor can (11).

14. The fan (10) according to one of claims 12 or 13, wherein the ring element (2) is fixed to the rotor can bottom (12) by means of the at least one fastening element (3).

15. The fan according to any one of claims 12 to 14, wherein the axial annular projection (6) is formed on the axial inner surface (22) of the ring element (2) opposite the axial outer surface (21), in which axial annular projection a bearing system of a rotor of the fan (10), arranged in the rotor can (11), is accommodated at least in sections or partially.

16. The fan (10) according to any one of the preceding claims 12 to 15, wherein at least one shielding segment (4) is formed on the ring element (2), which shielding segment extends radially outwards from the ring element (2) and over at least part of the overall circumference of the ring element (2), such that a liquid entering the rotor can (11) and impinging on the shielding segment (4) is dischargeable by the corresponding shielding segment (4) in a radially outward direction, and the tubular projection (6) is configured such that a liquid flowing along the rotor can (11) is drainable at the axial annular projection (6).

17. The fan (10) according to any one of the preceding claims 12 to 16, wherein the rotor can bottom (12) of the rotor can (11) has a plurality of openings (14), and the splash guard (1) is fixed in a respective one of the openings (14) by means of the at least one fastening element (3).

18. The fan (10) according to claim 17, wherein the at least one fastening element (3) is fixed to the corresponding opening (14) of the rotor can bottom element (12) by means of adhesive bonding or ultrasonic welding or a press fit.

19. The fan (10) according to any one of the preceding claims 12 to 18, wherein the axial annular projection (6), together with a bearing tube of a fan housing of the fan (10), forms a labyrinth or a labyrinth seal.

## Revendications

1. Pare-éclaboussures (1) pour un ventilateur (10), conçue pour le montage sur un fond de cloche de rotor (12) d'une cloche de rotor (11) du ventilateur (10),
comprenant un élément annulaire (2) s'étendant circonférentiellement autour d'un axe de rotation, qui peut être agencé de manière étanche par une surface extérieure (21) axiale contre une surface de paroi intérieure (13) axiale du fond de cloche de rotor (12),
dans lequel au moins un élément de fixation (3) est formé sur l'élément annulaire (2) en vue de la fixation sur le fond de cloche de rotor (12),
dans lequel une saillie annulaire axiale (6) s'étendant circonférentiellement autour de l'axe de rotation est formée sur une surface intérieure (22) axiale, opposée à la surface extérieure (21) axiale, de l'élément annulaire (2),
dans lequel au moins un segment de blindage (4) est formé sur l'élément annulaire (2), lequel segment de blindage s'étend depuis l'élément annulaire (2) radialement vers l'extérieur et sur au moins une partie d'une circonférence totale de l'élément annulaire (2), de telle sorte qu'un liquide heurtant le segment de blindage (4) peut être évacué en étant dirigé radialement vers l'extérieur,
**caractérisée en ce que** ledit au moins un segment de blindage (4) est formé à distance axiale de la surface extérieure (21) axiale sur une surface circonférentielle (5) dirigée radialement vers l'extérieur de l'élément annulaire (2).

2. Pare-éclaboussures (1) selon la revendication 1, dans lequel le segment de blindage (4) s'étend sur une partie de la circonférence totale de l'élément annulaire (2).

3. Pare-éclaboussures (1) selon la revendication 1 ou 2, dans lequel ledit au moins un segment de blindage (4) est agencé de manière inclinée par rapport à un plan axial perpendiculaire à l'axe de rotation.

4. Pare-éclaboussures (1) selon l'une quelconque des revendications précédentes, dans lequel une pluralité de segments de blindage (4) sont formés sur l'élément annulaire (2) et les segments de blindage (4) respectifs sont agencés de manière à être uniformément espacés dans la direction circonférentielle de l'élément annulaire (2).

5. Pare-éclaboussures (1) selon la revendication 4, dans lequel trois segments de blindage (4) sont formés, lesquels sont espacés les uns des autres d'un espacement angulaire respectif de 120°.

6. Pare-éclaboussures selon l'une quelconque des revendications précédentes, dans lequel une pluralité d'éléments de fixation (3) sont formés sur l'élément annulaire (2) et les éléments de fixation (3) respectifs sont agencés de manière à être uniformément espacés dans la direction circonférentielle de l'élément annulaire (2).

7. Pare-éclaboussures selon les revendications 5 et 6, dans lequel trois éléments de fixation (3) sont formés, lesquels sont espacés les uns des autres d'un espacement angulaire respectif de 120° et sont agencés chacun au milieu entre deux segments de blindage (4) adjacents.

8. Pare-éclaboussures (1) selon l'une quelconque des revendications précédentes, dans lequel ledit au moins un segment de blindage (4) est réalisé sous la forme d'une languette en vue de dessus axiale.

9. Pare-éclaboussures (1) selon l'une quelconque des revendications précédentes, dans lequel ledit au moins un élément de fixation (3) est réalisé sous la forme d'un boulon et fait saillie de la surface extérieure (21) axiale de l'élément annulaire (2).

10. Pare-éclaboussures (1) selon la revendication 9, dans lequel ledit au moins un élément de fixation (3) présente deux rainures opposées le long de son extension longitudinale axiale.

11. Pare-éclaboussures (1) selon l'une quelconque des revendications précédentes, dans lequel la saillie annulaire axiale (6) est réalisée de manière étagée ou conique ou en forme d'entonnoir au moins sur sa surface intérieure (61), dans lequel un diamètre intérieur de la saillie annulaire axiale (6) diminue en direction de l'élément annulaire (2).

12. Ventilateur (10) comprenant une cloche de rotor (11) et un pare-éclaboussures (1) selon l'une quelconque des revendications précédentes agencé sur un fond de cloche de rotor (12) de la cloche de rotor (11).

13. Ventilateur (10) selon la revendication 12, dans lequel l'élément annulaire (2) est agencé de manière étanche par la surface extérieure (21) axiale contre une surface intérieure (13) du fond de cloche de rotor (12) de la cloche de rotor (11).

14. Ventilateur (10) selon la revendication 12 ou 13, dans lequel l'élément annulaire (2) est fixé sur le fond de cloche de rotor (12) au moyen dudit au moins un élément de fixation (3).

15. Ventilateur selon l'une quelconque des revendications 12 à 14, dans lequel la saillie annulaire axiale (6) est formée sur la surface intérieure (22) axiale, opposée à la surface extérieure (21) axiale, de l'élément annulaire (2), saillie dans laquelle un système de palier d'un rotor du ventilateur (10) agencé dans la cloche de rotor (11) est logé au moins par tronçons ou partiellement.

16. Ventilateur (10) selon l'une quelconque des revendications 12 à 15, dans lequel au moins un segment de blindage (4) est formé sur l'élément annulaire (2), lequel segment de blindage s'étend depuis l'élément annulaire (2) radialement vers l'extérieur et sur au moins une partie de la circonférence totale de l'élément annulaire (2), de telle sorte qu'un liquide pénétrant dans la cloche de rotor (11) et heurtant le segment de blindage (4) peut être évacué par le segment de blindage (4) correspondant en étant dirigé radialement vers l'extérieur, et la saillie de forme tubulaire (6) est réalisée de telle sorte qu'un liquide s'écoulant le long de la cloche de rotor (11) peut s'égoutter au niveau de la saillie annulaire axiale (6).

17. Ventilateur (10) selon l'une quelconque des revendications 12 à 16, dans lequel le fond de cloche de rotor (12) de la cloche de rotor (11) présente une pluralité d'ouvertures (14) et le pare-éclaboussures (1) est fixé au moyen dudit au moins un élément de fixation (3) dans l'une respective des ouvertures (14).

18. Ventilateur (10) selon la revendication 17, dans lequel ledit au moins un élément de fixation (3) est fixé au niveau de l'ouverture (14) correspondante du fond de cloche de rotor (12) par collage ou soudage par ultrasons ou ajustement serré.

19. Ventilateur (10) selon l'une quelconque des revendications 12 à 18, dans lequel la saillie annulaire axiale (6) forme un labyrinthe ou un joint en labyrinthe avec un tube de palier d'un boîtier de ventilateur du ventilateur (10).
